# EUROPEAN PATENT APPLICATION

(11) **EP 4 607 651 A1**
(43) Date of publication of application: **27.08.2025**
(21) Application number: 23909675.3
(22) Date of filing: 07.11.2023
(51) Int. Cl.: H01M 10/42, H01M 50/204, H01M 50/249, H01M 50/242, H01M 50/244, H01M 10/48

(54) **BATTERY CLUSTER, ENERGY STORAGE SYSTEM, UNINTERRUPTIBLE POWER SUPPLY SYSTEM, AND ELECTRIC VEHICLE**

(30) Priority: 29.12.2022 CN 202211728318
(71) Applicant: Huawei Digital Power Technologies Co., Ltd., Shenzhen, Guangdong 518043 (CN)
(72) Inventor: LIU, Chengyong, Shenzhen, Guangdong 518043 (CN); ZHU, Jing, Shenzhen, Guangdong 518043 (CN); CHEN, Cheng, Shenzhen, Guangdong 518043 (CN)
(74) Representative: Gill Jennings & Every LLP
(86) International application number: PCT/CN2023/130139
(87) International publication number: WO 2024/139742

(57) **Abstract**

A battery cluster, an energy storage system, an uninterruptible power system, and an electric vehicle are provided. The battery cluster includes a metal enclosure and a first battery pack accommodated in the metal enclosure. The first battery pack includes a battery module and an insulation detection circuit. A first end of the insulation detection circuit is connected to the metal enclosure, and a second end of the insulation detection circuit is connected to one end of the battery module. When detecting that a current between the battery module and the metal enclosure is higher than a preset current threshold, the insulation detection circuit determines that insulation of the first battery pack fails. A size of the battery cluster can be further reduced.

## Description

This application claims priority to Chinese Patent Application No. 202211728318.2, filed with the China National Intellectual Property Administration on December 29, 2022 and entitled "BATTERY CLUSTER, ENERGY STORAGE SYSTEM, UNINTERRUPTIBLE POWER SYSTEM, AND ELECTRIC VEHICLE", which is incorporated herein by reference in its entirety.

### TECHNICAL FIELD

This application relates to the field of battery technologies, and in particular, to a battery cluster, an energy storage system, an uninterruptible power system, and an electric vehicle.

### BACKGROUND

Insulation processing of battery packs is to wrap an insulation material (for example, a fiber tape) around each battery pack, to isolate an electrolyte from a metal enclosure. Therefore, an insulation failure of the battery pack may be understood as that the insulation material wrapped around the battery pack is damaged, and an electrical connection is established between the electrolyte and the metal enclosure, causing a high current on the metal enclosure of the battery pack. When a person touches the metal enclosure of the battery pack, a leakage loop may be formed with the ground, which endangers personal safety.

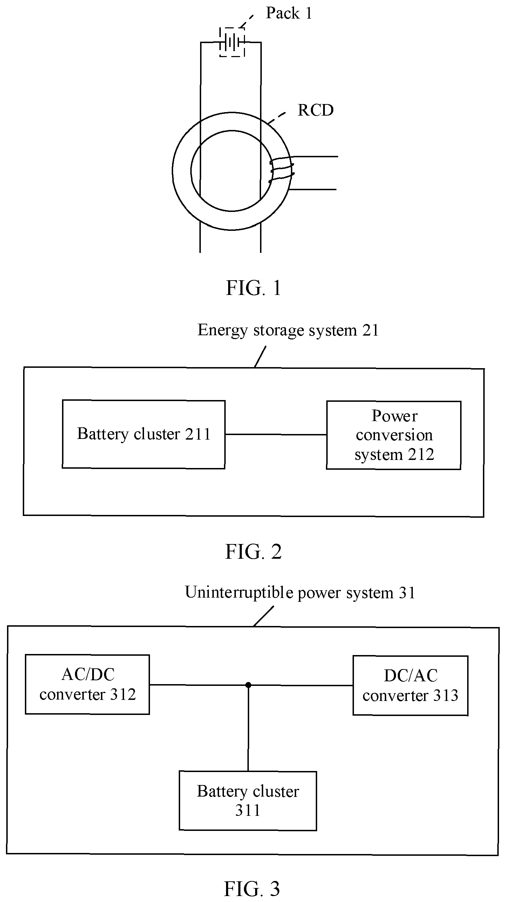

A battery cluster includes one or more battery packs connected in series, in parallel, or in series and parallel. Therefore, in application of the battery cluster, whether insulation of the battery pack fails needs to be detected. In the conventional technology, insulation failure detection on the battery pack is performed in real time by using a residual current device (Residual Current Device, RCD) shown in FIG. 1. The RCD is disposed at a positive output end and a negative output end of a pack 1, and detects a current at the positive output end and a current at the negative output end of the pack 1 in real time. When a difference between the current at the positive output end of the pack 1 and the current at the negative output end of the pack 1 is higher than a specific threshold, the RCD determines that insulation of the pack 1 fails. It can be learned that a large-size RCD is required for insulation failure detection on an existing battery pack, and consequently, a size of a battery cluster is large.

### SUMMARY

This application provides a battery cluster, an energy storage system, an uninterruptible power system, and an electric vehicle, to reduce a size of the battery cluster.

According to a first aspect, an embodiment of this application provides a battery cluster, where the battery cluster includes a metal enclosure and a first battery pack accommodated in the metal enclosure, and the first battery pack includes a battery module and an insulation monitoring circuit.

A first end of the insulation detection circuit is connected to the metal enclosure, and a second end of the insulation detection circuit is connected to one end of the battery module. When detecting that a current between the battery module and the metal enclosure is higher than a preset current threshold, the insulation detection circuit determines that insulation of the first battery pack fails.

In this embodiment of this application, the insulation detection circuit is disposed in the battery cluster. The insulation detection circuit specifically determines, by detecting whether the current between the battery module and the metal enclosure is higher than the preset current threshold, whether the insulation of the battery pack fails. Different from the conventional technology in which an RCD detects currents at both positive and negative ends of the battery pack in real time to determine whether the insulation of the battery pack fails, in this embodiment of this application, a connection relationship of the insulation detection circuit is changed, to provide a new insulation detection manner of the battery pack, and the small-size insulation detection circuit may be used, rather than the large-size RCD. Therefore, according to this embodiment of this application, a size of the battery cluster can be reduced.

With reference to the first aspect, in a first possible implementation, the first battery pack further includes a first power conversion circuit, a second power conversion circuit, and a transformer that are accommodated in the metal enclosure, where the transformer is disposed between the first power conversion circuit and the second power conversion circuit, and the transformer includes a first winding, a second winding, and a third winding.

In a specific implementation, a first end and a second end of the first power conversion circuit are respectively connected to two ends of the battery module, a third end and a fourth end of the first power conversion circuit are respectively connected to two ends of the first winding, a first end and a second end of the second power conversion circuit are respectively connected to two ends of the second winding, and a third end and a fourth end of the insulation detection circuit are respectively connected to two ends of the third winding.

In this embodiment of this application, the third winding is added to the transformer, and power is supplied to the insulation detection circuit through the third winding. The insulation detection circuit determines, by detecting whether the current between the battery module and the metal enclosure is higher than the preset current threshold, whether the insulation of the battery pack fails. The battery cluster provided in this embodiment of this application does not need an additional power supply, so that the size of the battery cluster can be further reduced.

With reference to the first possible implementation of the first aspect, in a second possible implementation, the insulation detection circuit includes a current sampling sub-circuit and a rectifier sub-circuit, a first input end and a second input end of the rectifier sub-circuit are respectively connected to the two ends of the third winding, a first output end of the rectifier sub-circuit is connected to the current sampling sub-circuit, and a second output end of the rectifier sub-circuit is connected to the metal enclosure or the battery module.

With reference to the first aspect or any one of the foregoing possible implementations of the first aspect, in a third possible implementation, the insulation detection circuit includes a switch sub-circuit, and the switch sub-circuit is turned on when an insulation detection start signal is received.

With reference to the third possible implementation of the first aspect, in a fourth possible implementation, the insulation detection circuit further includes a control sub-circuit, and the control sub-circuit sends the insulation detection start signal to the switch sub-circuit when the battery cluster is in a non-charging state and a non-discharging state.

With reference to the first aspect or any one of the foregoing possible implementations of the first aspect, in a fifth possible implementation, the battery cluster further includes a communication cable, the first battery pack further includes a first battery management circuit, and the first battery management circuit is connected to a battery control circuit through the communication cable.

In a specific implementation, the first battery management circuit sends an insulation failure warning signal to the battery control circuit when the insulation of the first battery pack fails.

With reference to the fifth possible implementation of the first aspect, in a sixth possible implementation, the first battery management circuit further sends a location of the first battery pack in the battery cluster to the battery control circuit.

With reference to the fifth possible implementation of the first aspect, in a seventh possible implementation, the battery cluster further includes a second battery pack and the battery control circuit, and the second battery pack includes a second battery management circuit.

In a specific implementation, a first end of the second battery management circuit is connected to the first battery management circuit, and the first battery management circuit sends a location of the first battery pack relative to the second battery pack to the second battery management circuit. A second end of the second battery management circuit is connected to the battery control circuit, and the second battery management circuit sends a location of the second battery pack in the battery cluster and the location of the first battery pack relative to the second battery pack to the battery control circuit. In this case, the battery control circuit may determine a location of the first battery pack in the battery cluster.

According to a second aspect, an embodiment of this application provides an energy storage system, where the energy storage system includes a power conversion system and the battery cluster according to the first aspect or any one of the foregoing possible implementations of the first aspect, and the battery cluster is connected to the power conversion system.

According to a third aspect, an embodiment of this application provides an uninterruptible power system, where the uninterruptible power system includes an AC/DC converter, a DC/AC converter, and the battery cluster according to the first aspect or any one of the foregoing possible implementations of the first aspect, and the battery cluster is connected to the AC/DC converter and the DC/AC converter.

According to a fourth aspect, an embodiment of this application provides an electric vehicle, where the electric vehicle includes a motor and the battery cluster according to the first aspect or any one of the foregoing possible implementations of the first aspect, and the battery cluster is configured to supply power to the motor.

It should be understood that implementations and beneficial effect of the foregoing plurality of aspects of this application may be referred to each other.

### BRIEF DESCRIPTION OF DRAWINGS

FIG. 1 is a block diagram of a structure of a battery cluster according to the conventional technology;
FIG. 2 is a block diagram of a structure of an energy storage system according to an embodiment of this application;
FIG. 3 is a block diagram of a structure of an uninterruptible power system according to an embodiment of this application;
FIG. 4 is a block diagram of a structure of an electric vehicle according to an embodiment of this application;
FIG. 5 is a block diagram of a structure of a battery cluster according to an embodiment of this application;
FIG. 6 is a circuit diagram of an insulation detection circuit according to an embodiment of this application;
FIG. 7 is another block diagram of a structure of a battery cluster according to an embodiment of this application;
FIG. 8 is another circuit diagram of an insulation detection circuit according to an embodiment of this application;
FIG. 9 is another block diagram of a structure of a battery cluster according to an embodiment of this application; and
FIG. 10 is another block diagram of a structure of a battery cluster according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

To better understand this application, a relationship between a battery, a battery cluster, a battery pack, and a battery module is first described.

In the field of battery technologies, a battery is a general term, and the battery may include one battery cluster, or include a plurality of battery clusters that are connected in parallel to a direct current busbar.

The battery cluster includes one battery pack, or includes a plurality of battery packs connected in series, in parallel, or in series and parallel.

The battery pack includes one battery module and a battery management system (Battery Management System, BMS), or includes a plurality of battery modules centrally managed by the BMS. The battery pack may also be referred to as a pack. The battery pack has a positive electrode, a negative electrode, an electrolyte, and a metal enclosure, and the metal enclosure may be, for example, an aluminum enclosure or a steel enclosure.

The battery module includes one cell, or the battery module includes a plurality of cells connected in series, in parallel, or in series and parallel. In this case, one or more cells are packaged together by a same enclosure frame. For example, in addition to the cell, the battery module may further include a circuit having a specific function output, for example, a battery short-circuit protection circuit or a battery temperature detection circuit.

The cell is a single electrochemical cell that has positive and negative electrodes and is generally not used directly. The cell is a smallest energy storage unit in the battery.

The technical solutions of this application are further described below in detail with reference to the accompanying drawings.

FIG. 2 is a block diagram of a structure of an energy storage system according to an embodiment of this application. As shown in FIG. 2, an energy storage system 21 provided in this embodiment of this application includes a battery cluster 211 and a power conversion system (Power Conversion System, PCS) 212 connected to the battery cluster 211.

In a specific implementation, a plurality of battery clusters 211 may be connected in series, in parallel, or in series and parallel to form a lithium battery, a lithium-ion battery, a lead-acid battery, a sodium-ion battery, a nickel-cadmium battery, a nickel-hydrogen battery, or the like. In other words, an electrolyte injected into the battery cluster is not limited in embodiments of this application.

For example, the battery cluster 211 includes a battery control circuit, and the battery control circuit is also referred to as a battery control unit (Battery Control Unit, BCU), is a component of a BMS, and may be referred to as a host of the BMS. For example, the battery control circuit may measure a total voltage and a total current of the plurality of battery clusters 211, and the battery control circuit may control charging and discharging of each battery cluster 211, evaluate a battery state of charge value of each battery cluster 211, and the like.

The power conversion system 212 may convert an alternating current into a direct current in a charging process of the battery cluster 211. Alternatively, the power conversion system 212 may convert a direct current into an alternating current in a discharging process of the battery cluster 211.

For example, the energy storage system 21 may be specifically used in a photovoltaic energy storage scenario, a wind energy storage scenario, or the like. For example, the energy storage system 21 is used in the photovoltaic energy storage scenario. The energy storage system 21 is connected to a photovoltaic inverter, and the photovoltaic inverter converts a direct current generated by a photovoltaic module into a first alternating current. In this case, the power conversion system 212 may convert the first alternating current into a first direct current, and transmit the first direct current to the battery cluster 211, to charge the battery cluster 211. The energy storage system 21 is further connected to an alternating current power grid or an alternating current load. When output power of the photovoltaic module is insufficient, the power conversion system 212 may convert a second direct current output by the battery cluster 211 into a second alternating current, and transmit the second alternating current to the alternating current power grid, or provide the second alternating current for the alternating current load, to discharge the battery cluster 211.

Optionally, the energy storage system 21 provided in this embodiment of this application may be further specifically used in a consumer electronics product (for example, a smartphone, a smartwatch, a smart band, or a Bluetooth headset), and the battery cluster 211 may be specifically understood as a battery cluster corresponding to the consumer electronics product.

A difference between the energy storage system 21 provided in this embodiment of this application and an energy storage system in the conventional technology lies in that the battery cluster 211 included in the energy storage system 21 is different from a battery cluster included in the energy storage system in the conventional technology. In a specific implementation, in this embodiment of this application, an insulation detection circuit is disposed in the battery cluster 211. The insulation detection circuit specifically determines, by detecting whether a current between the battery module and the metal enclosure of the battery cluster is higher than a preset current threshold, whether insulation of the battery cluster 211 fails. In other words, specifically in this embodiment of this application, a detection manner of the insulation detection circuit is changed, to detect whether insulation of a battery pack fails.

In some feasible implementations, the battery cluster provided in this embodiment of this application may be used in an uninterruptible power system (Uninterruptible Power System, UPS). FIG. 3 is a block diagram of a structure of an uninterruptible power system according to an embodiment of this application. As shown in FIG. 3, the uninterruptible power system 31 includes a battery cluster 311, an AC/DC converter 312, and a DC/AC converter 313.

An input end of the AC/DC converter 312 is connected to an alternating current power grid, an output end of the AC/DC converter 312 is connected to the battery cluster 311 and an input end of the DC/AC converter 313, and an output end of the DC/AC converter 313 is connected to an alternating current load. For example, when an output voltage of the alternating current grid is normal, the AC/DC converter 312 and the DC/AC converter 313 regulate the voltage output by the alternating current power grid, and then provide a regulated voltage for the alternating current load. In this case, the uninterruptible power system 31 may be used as a voltage regulator, and may also charge the battery cluster 311 at the same time. When the output of the alternating current power grid is interrupted, for example, the grid is faulty or a power failure occurs during maintenance, the battery cluster 311 in the uninterruptible power system 31 outputs a third direct current to the DC/AC converter 313, and the DC/AC converter 313 converts the third direct current into a third alternating current, and provides the third alternating current for the alternating current load, to keep normal working of the alternating current load and protect software and hardware of the load from being damaged.

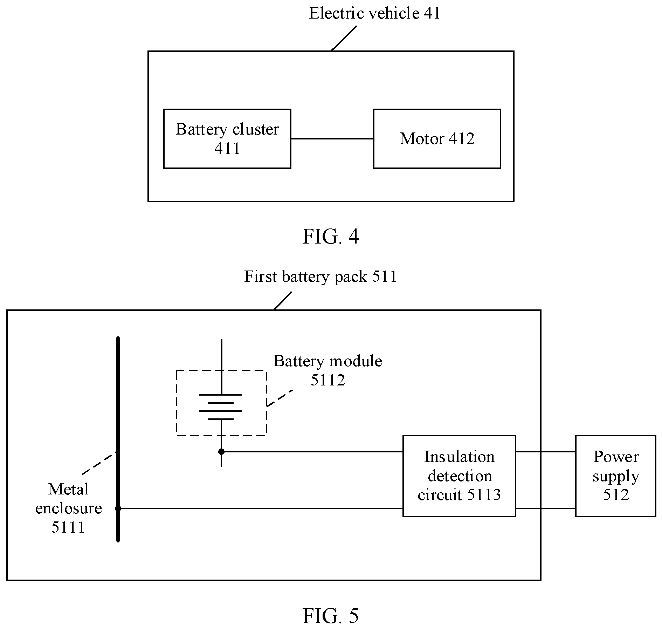

In some feasible implementations, the battery cluster provided in this embodiment of this application may be used in an electric vehicle. FIG. 4 is a block diagram of a structure of an electric vehicle according to an embodiment of this application. As shown in FIG. 4, an electric vehicle 41 includes a battery cluster 411 and a motor 412. The battery cluster 411 is connected to the motor 412 through an inverter. In this case, the battery cluster 411 specifically outputs a fourth direct current to the inverter, and the inverter converts the fourth direct current into a fourth alternating current. The fourth alternating current is used to drive the motor, to provide power for the electric vehicle.

A specific structure of the battery cluster is described below with reference to the accompanying drawings.

FIG. 5 is a block diagram of the structure of the battery cluster according to an embodiment of this application. As shown in FIG. 5, the battery cluster includes a first battery pack 511. The first battery pack 511 includes a metal enclosure 5111, and a battery module 5112 and an insulation detection circuit 5113 that are accommodated in the metal enclosure 5111.

In a specific implementation, a first end of the insulation detection circuit 5113 is connected to the metal enclosure 5111. For example, the metal enclosure 5111 may be an aluminum enclosure, a steel enclosure, an iron enclosure, or the like. A second end of the insulation detection circuit 5113 is connected to one end of the battery module 5112. In FIG. 5, an example in which the second end of the insulation detection circuit 5113 is connected to a negative end of the battery module 5112 is used. In some feasible implementations, the second end of the insulation detection circuit 5113 may alternatively be connected to a positive end of the battery module 5112.

A third end and a fourth end of the insulation detection circuit 5113 are respectively connected to two ends of a power supply 512.

The power supply 512 outputs a voltage to the third end and the fourth end of the insulation detection circuit 5113. If insulation of the first battery pack 511 fails, the power supply 512 forms a closed loop with the insulation detection circuit 5113, the battery module 5112, and the metal enclosure 5111. In this case, if the insulation detection circuit 5113 detects that a current of the closed loop is higher than a preset current threshold, that is, the insulation detection circuit 5113 detects that a current between the battery module 5112 and the metal enclosure 5111 is higher than the preset current threshold, it is determined that the insulation of the first battery pack 511 fails. For example, the preset current threshold may be preset based on a specific application scenario of the battery cluster. For example, if the battery cluster is used in an electric vehicle, the preset current threshold may be set based on an insulation standard of a power battery of the electric vehicle.

It may be understood that, in FIG. 5, an example in which the battery cluster specifically includes one first battery pack is used. In some feasible implementations, the battery cluster may include a plurality of first battery packs.

In this embodiment of this application, the insulation detection circuit is disposed in the battery cluster. The insulation detection circuit specifically determines, by detecting whether the current between the battery module and the metal enclosure is higher than the preset current threshold, whether the insulation of the battery pack fails. Different from the conventional technology in which an RCD detects currents at both positive and negative ends of the battery cluster in real time to determine whether the insulation of the battery pack fails, in this embodiment of this application, a connection relationship of the insulation detection circuit is changed, to provide a new insulation detection manner of the battery pack, and the small-size insulation detection circuit may be used, rather than the large-size RCD. Therefore, according to this embodiment of this application, a size of the battery cluster can be reduced.

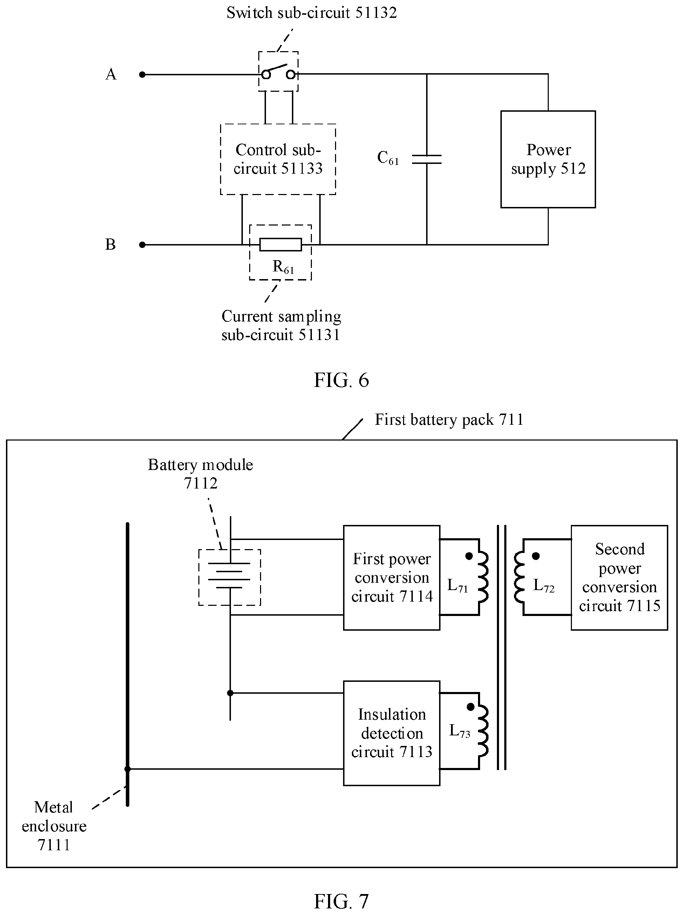

For example, the following describes a specific structure of the insulation detection circuit 5113 with reference to FIG. 6.

In some feasible implementations, refer to FIG. 6. FIG. 6 is a circuit diagram of the insulation detection circuit according to an embodiment of this application. As shown in FIG. 6, the insulation detection circuit 5113 includes a current sampling sub-circuit 51131. In FIG. 6, an example in which the current sampling sub-circuit 51131 is specifically implemented as a resistor *R*₆₁ is used. One end of the power supply 512 is connected to one end of the resistor *R*₆₁, and the other end of the resistor *R*₆₁ is connected to a point B. Optionally, the current sampling sub-circuit 51131 may alternatively be specifically implemented as a current sensor.

Optionally, in some feasible implementations, the insulation detection circuit 5113 further includes a switch sub-circuit 51132. The switch sub-circuit 51132 and the current sampling sub-circuit 51131 are connected in series between a point A and the point B. For example, as shown in FIG. 6, one end of the switch sub-circuit 51132 is connected to the other end of the power supply 512, and the other end of the switch sub-circuit 51132 is connected to the point A. Alternatively, one end of the resistor *R*₆₁ is connected to one end of the power supply 512, the other end of the resistor *R*₆₁ is connected to one end of the switch sub-circuit 51132, and the other end of the switch sub-circuit 51132 is connected to the point B.

The switch sub-circuit 51132 is turned on when an insulation detection start signal is received. For example, the insulation detection start signal may be sent by a battery control circuit in the battery cluster to the switch sub-circuit 51132.

The switch sub-circuit 51132 may be specifically implemented as a solid-state switch or a semiconductor switch. The semiconductor switch includes but is not limited to a triode, a metal-oxide-semiconductor field-effect transistor (Metal-Oxide-Semiconductor Field-Effect Transistor, MOSFET), an insulated gate bipolar transistor (Insulated Gate Bipolar Transistor, IGBT), and the like.

For example, the insulation detection circuit 5113 further includes a filter capacitor *C*₆₁, and two ends of the capacitor *C*₆₁ are connected in parallel to two ends of the power supply 512, to filter an output voltage of the power supply 512.

Optionally, in some feasible implementations, the insulation detection circuit further includes a control sub-circuit 51133. The control sub-circuit 51133 may send the insulation detection start signal to the switch sub-circuit 51132 when the battery cluster is in a non-charging state and a non-discharging state. It may be understood that, that the battery cluster is in a non-charging state and a non-discharging state means that the battery cluster is in a float charging state, a power-on state, or a standby state.

Optionally, the point A is the first end of the insulation detection circuit, and the point B is the second end of the insulation detection circuit. In this case, the switch sub-circuit 51132 is connected to the metal enclosure, and the other end of the resistor *R*₆₁ is connected to the battery module. Alternatively, the point A is the second end of the insulation detection circuit, and the point B is the first end of the insulation detection circuit. In this case, the switch sub-circuit 51132 is connected to the battery module, and the other end of the resistor *R*₆₁ is connected to the metal enclosure.

Optionally, in some feasible implementations, refer to FIG. 7. FIG. 7 is another block diagram of the structure of the battery cluster according to an embodiment of this application. As shown in FIG. 7, the battery cluster includes a first battery pack 711. The first battery pack 711 includes a metal enclosure 7111, and a battery module 7112, an insulation detection circuit 7113, a first power conversion circuit 7114, a second power conversion circuit 7115, and a transformer that are accommodated in the metal enclosure 7111. The transformer is a transformer disposed between the first power conversion circuit 7114 and the second power conversion circuit 7115. The transformer includes a first winding *L*₇₁, a second winding *L*₇₂, and a third winding *L*₇₃.

In a specific implementation, a first end and a second end of the first power conversion circuit 7114 are respectively connected to two ends of the battery module 7112, and a third end and a fourth end of the first power conversion circuit 7114 are respectively connected to two ends of the first winding *L*₇₁. A first end and a second end of the second power conversion circuit 7115 are respectively connected to two ends of the second winding *L*₇₂, and a third end and a fourth end of the second power conversion circuit 7115 are respectively connected to a positive bus and a negative bus of the battery cluster.

The first power conversion circuit 7114, the first winding *L*₇₁, the second winding *L*₇₂, and the second power conversion circuit 7115 are components of an active equalization circuit of the battery module 7112. The active equalization circuit may keep a voltage difference between the first battery pack 711 and another battery pack in the battery cluster within a preset range. For example, the active equalization circuit may be specifically implemented as an LLC circuit, a full-bridge conversion circuit, a half-bridge conversion circuit, a forward circuit, or a flyback circuit. For specific implementations of the first power conversion circuit 7114 and the second power conversion circuit 7115, refer to the LLC circuit, the full-bridge conversion circuit, the half-bridge conversion circuit, the forward circuit, or the flyback circuit. Details are not described herein.

A first end of the insulation detection circuit 7113 is connected to the metal enclosure 7111, and a second end of the insulation detection circuit 7113 is connected to one end of the battery module 7112. In FIG. 7, an example in which the second end of the insulation detection circuit 7113 is connected to a negative end of the battery module 7112 is used. In some feasible implementations, the second end of the insulation detection circuit 7113 may alternatively be connected to a positive end of the battery module 7112.

A third end and a fourth end of the insulation detection circuit 7113 are connected to two ends of the third winding *L*₇₃. Different from the third end and the fourth end of the insulation detection circuit 5113 shown in FIG. 5 that are respectively connected to the two ends of the power supply 512, the third end and the fourth end of the insulation detection circuit 7113 shown in this embodiment of this application are connected to the third winding *L*₇₃. In this case, a voltage of the insulation detection circuit 7113 is from the third winding *L*₇₃.

Voltages at the two ends of the third winding *L*₇₃ are loaded at the third end and the fourth end of the insulation detection circuit 7113. If insulation of the first battery pack 711 fails, the third winding *L*₇₃ forms a closed loop with the insulation detection circuit 7113, the battery module 7112, and the metal enclosure 7111. If the insulation detection circuit 7113 detects that a current of the closed loop is higher than a preset current threshold, that is, the insulation detection circuit 7113 detects that a current between the battery module 7112 and the metal enclosure 7111 is higher than the preset current threshold, it is determined that the insulation of the first battery pack 711 fails.

In this embodiment of this application, the third winding is added to the transformer in the active equalization circuit, and power is supplied to the insulation detection circuit through the third winding. The insulation detection circuit determines, by detecting whether the current between the battery module and the metal enclosure is higher than the preset current threshold, whether the insulation of the battery pack fails. Different from the battery cluster shown in FIG. 5, the battery cluster provided in this embodiment of this application does not need an additional power supply, so that a size of the battery cluster can be further reduced.

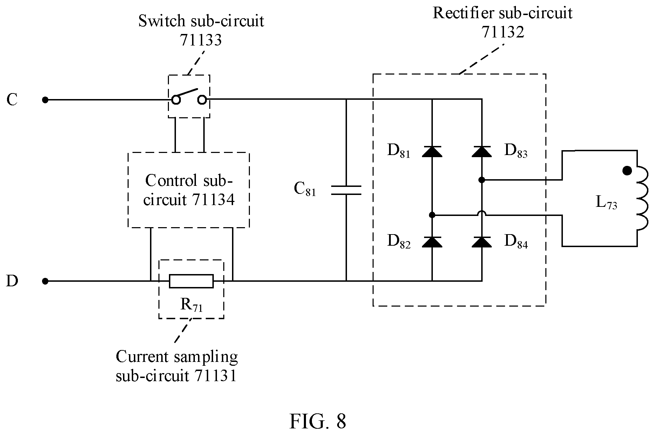

The following describes a specific structure of the insulation detection circuit 7113 with reference to FIG. 8.

In some feasible implementations, refer to FIG. 8. FIG. 8 is another circuit diagram of the insulation detection circuit according to an embodiment of this application. As shown in FIG. 8, the insulation detection circuit 7113 includes a current sampling sub-circuit 71131 and a rectifier sub-circuit 71132.

The rectifier sub-circuit 71132 includes a diode *D*₈₁, a diode *D*₈₂, a diode *D*₈₃, and a diode *D*₈₄. An anode of the diode *D*₈₁ and a cathode of the diode *D*₈₂ are connected to one end of the third winding *L*₇₃, and an anode of the diode *D*₈₃ and a cathode of the diode *D*₈₄ are connected to the other end of the third winding *L*₇₃.

An anode of the diode *D*₈₂ and an anode of the diode *D*₈₄ are connected to the current sampling sub-circuit 71131. In FIG. 8, an example in which the current sampling sub-circuit 71131 is specifically implemented as a resistor *R*₈₁ is used. In this case, the anode of the diode *D*₈₂ and the anode of the diode *D*₈₄ are connected to one end of the resistor R₈₁, and the other end of the resistor *R*₈₁ is connected to a point D. Optionally, the current sampling sub-circuit 71131 may alternatively be specifically implemented as a current sensor.

It may be understood that, in this embodiment of this application, an example in which the rectifier sub-circuit is specifically implemented as four diodes is used. In some feasible implementations, the rectifier sub-circuit may alternatively be specifically implemented as four semiconductor switches.

Optionally, the insulation detection circuit 7113 further includes a filter capacitor C₈₁. Two ends of the capacitor C₈₁ are connected in parallel between a first output end and a second output end of the rectifier sub-circuit 71132, to filter a direct current obtained after the rectifier sub-circuit 71132 performs rectification.

In this embodiment of this application, the rectifier sub-circuit 71132 rectifies a power supply provided by the third winding L₇₃.

Optionally, in some feasible implementations, the insulation detection circuit 7113 further includes a switch sub-circuit 71133. The switch sub-circuit 71133 is connected between a point C and the rectifier sub-circuit 71132 or between the point D and the rectifier sub-circuit 71132. For example, one end of the switch sub-circuit 71133 is connected to a cathode of the diode *D*₈₁ and a cathode of the diode *D*₈₃, and the other end of the switch sub-circuit 71133 is connected to the point C. Alternatively, the switch sub-circuit 71133 is connected between the point D and the resistor *R*₈₁. Alternatively, the switch sub-circuit 71133 is connected between the resistor *R*₈₁ and the rectifier sub-circuit 71132.

The switch sub-circuit 71133 is turned on when an insulation detection start signal is received. For example, the insulation detection start signal may be sent by a battery control circuit in the battery cluster to the switch sub-circuit 71133.

The switch sub-circuit 71133 may be specifically implemented as a solid-state switch or a semiconductor switch. The semiconductor switch includes but is not limited to a triode, a MOSFET, an IGBT, and the like.

Optionally, in some feasible implementations, the insulation detection circuit 7113 further includes a control sub-circuit 71134. The control sub-circuit 71134 may send the insulation detection start signal to the switch sub-circuit 71133 when the battery cluster is in a non-charging state and a non-discharging state.

Optionally, the point C is the first end of the insulation detection circuit, and the point D is the second end of the insulation detection circuit. In this case, the cathode of the diode *D*₈₁ and the cathode of the diode *D*₈₃ are connected to the metal enclosure, and the other end of the resistor *R*₈₁ is connected to the battery module. Alternatively, the point C is the second end of the insulation detection circuit, and the point D is the first end of the insulation detection circuit. In this case, the cathode of the diode *D*₈₁ and the cathode of the diode *D*₈₃ are connected to the battery module, and the other end of the resistor *R*₈₁ is connected to the metal enclosure.

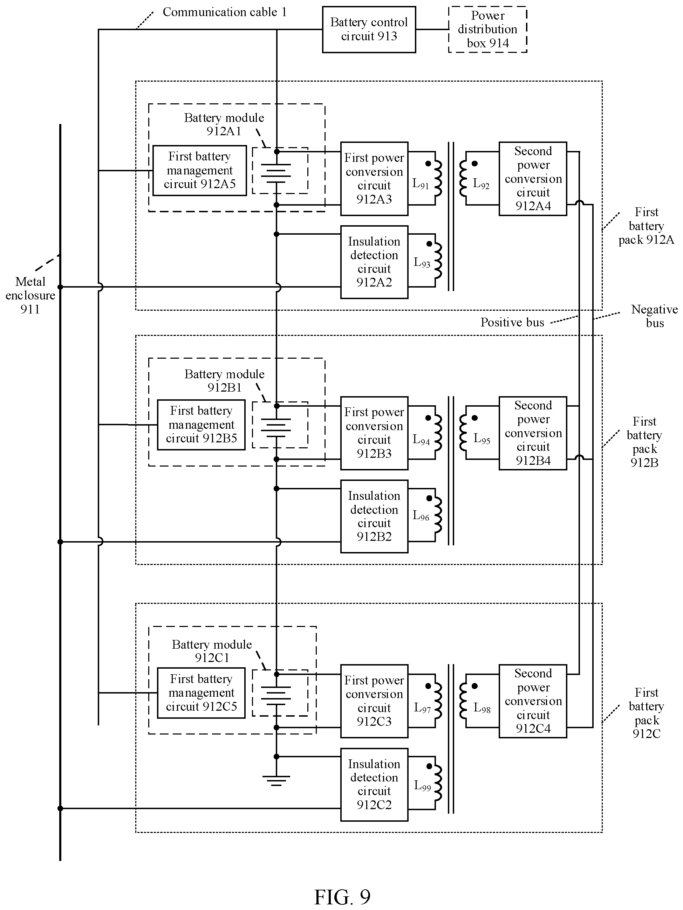

Optionally, in some feasible implementations, refer to FIG. 9. FIG. 9 is another block diagram of the structure of the battery cluster according to an embodiment of this application. As shown in FIG. 9, the battery cluster includes a metal enclosure 911 and a plurality of first battery packs accommodated in the metal enclosure 911, for example, a first battery pack 912A, a first battery pack 912B, and a first battery pack 912C.

For example, each first battery pack is specifically implemented as the first battery pack shown in FIG. 7. In this case, each first battery pack includes a metal enclosure, a battery module, an insulation detection circuit, a first power conversion circuit, a transformer, and a second power conversion circuit, and each first battery pack further includes a first battery management circuit. In this application, a battery management circuit is also referred to as a battery management unit (Battery management unit, BMU). Therefore, the first battery management circuit may also be referred to as a first battery management unit, and the second battery management circuit may also be referred to as a second battery management unit. The first battery management circuit is a component of a BMS, and may be referred to as a secondary device of the BMS.

The metal enclosure 911 of the battery cluster and the metal enclosure of each first battery pack have a same electric potential point. In a specific implementation, the insulation detection circuit in each first battery pack is connected to the metal enclosure corresponding to the first battery pack, and then the metal enclosure of each first battery pack is in contact with the metal enclosure 911 of the battery cluster. In other words, the metal enclosure of each first battery pack is electrically connected to the metal enclosure 911 of the battery cluster.

In a specific implementation, the first battery pack 912A includes a battery module 912A1, an insulation detection circuit 912A2, a first power conversion circuit 912A3, a transformer, a second power conversion circuit 912A4, and a first battery management circuit 912A5. The transformer includes a first winding *L*₉₁, a second winding *L*₉₂, and a third winding *L*₉₃.

In this case, a first end and a second end of the first power conversion circuit 912A3 are respectively connected in parallel to two ends of the battery module 912A1, and a third end and a fourth end of the first power conversion circuit 912A3 are respectively connected to two ends of the first winding *L*₉₁. Two ends of the second winding *L*₉₂ are respectively connected to a first end and a second end of the second power conversion circuit 912A4, and a third end and a fourth end of the second power conversion circuit 912A4 are respectively connected to a positive bus and a negative bus of the battery cluster. The first battery management circuit 912A5 and the battery module 912A1 are packaged together, and the first battery management circuit 912A5 is connected to a battery control circuit 913 through a communication cable 1. For example, the communication cable 1 may be a CAN communication cable.

A first end of the insulation detection circuit 912A2 is connected to the metal enclosure 911, a second end of the insulation detection circuit 912A2 is connected to one end of the battery module 912A1, and a third end and a fourth end of the insulation detection circuit 912A2 are connected to two ends of the third winding *L*₉₃.

The first battery management circuit 912A5 may send a first insulation failure warning signal to the battery control circuit 913 when insulation of the first battery pack 912A fails.

Optionally, the first battery management circuit 912A5 further sends a location of the first battery pack 912A in the battery cluster to the battery control circuit 913. Optionally, before sending the first insulation failure warning signal to the battery control circuit 913, the first battery management circuit 912A5 may send the location of the first battery pack 912A in the battery cluster to the battery control circuit 913. Alternatively, when determining that the insulation of the first battery pack 912A fails, the first battery management circuit 912A5 may send the first insulation failure warning signal and the location of the first battery pack 912A in the battery cluster to the battery control circuit 913 at the same time. Alternatively, after sending the first insulation failure warning signal to the battery control circuit 913, the first battery management circuit 912A5 may send the location of the first battery pack 912A in the battery cluster to the battery control circuit 913. For example, if the first battery pack 912A, the first battery pack 912B, and the first battery pack 912C are sequentially arranged from left to right, the location of the first battery pack 912A in the battery cluster is a leftmost location.

Similarly, the first battery pack 912B includes a battery module 912B1, an insulation detection circuit 912B2, a first power conversion circuit 912B3, a transformer, a second power conversion circuit 912B4, and a first battery management circuit 912B5. The transformer includes a first winding *L*₉₄, a second winding *L*₉₅, and a third winding *L*₉₆.

In this case, a first end and a second end of the first power conversion circuit 912B3 are respectively connected in parallel to two ends of the battery module 912B1, and a third end and a fourth end of the first power conversion circuit 912B3 are respectively connected to two ends of the first winding *L*₉₄. Two ends of the second winding *L*₉₅ are respectively connected to a first end and a second end of the second power conversion circuit 912B4, and a third end and a fourth end of the second power conversion circuit 912B4 are respectively connected to the positive bus and the negative bus of the battery cluster. The first battery management circuit 912B5 and the battery module 912B1 are packaged together, and the first battery management circuit 912B5 is connected to the battery control circuit 913 through the communication cable 1.

A first end of the insulation detection circuit 912B2 is connected to the metal enclosure 911, a second end of the insulation detection circuit 912B2 is connected to one end of the battery module 912B1, and a third end and a fourth end of the insulation detection circuit 912B2 are connected to two ends of the third winding *L*₉₆.

The first battery management circuit 912B5 may send a second insulation failure warning signal to the battery control circuit 913 when insulation of the first battery pack 912B fails.

Optionally, the first battery management circuit 912B5 further sends a location of the first battery pack 912B in the battery cluster to the battery control circuit 913. Optionally, before sending the second insulation failure warning signal to the battery control circuit 913, the first battery management circuit 912B5 may send the location of the first battery pack 912B in the battery cluster to the battery control circuit 913. Alternatively, when determining that the insulation of the first battery pack 912B fails, the first battery management circuit 912B5 may send the second insulation failure warning signal and the location of the first battery pack 912B in the battery cluster to the battery control circuit 913 at the same time. Alternatively, after sending the second insulation failure warning signal to the battery control circuit 913, the first battery management circuit 912B5 may send the location of the first battery pack 912B in the battery cluster to the battery control circuit 913. For example, if the first battery pack 912A, the first battery pack 912B, and the first battery pack 912C are sequentially arranged from left to right, the location of the first battery pack 912B in the battery cluster is a middle location.

The first battery pack 912C includes a battery module 912C1, an insulation detection circuit 912C2, a first power conversion circuit 912C3, a transformer, a second power conversion circuit 912C4, and a first battery management circuit 912C5. The transformer includes a first winding *L*₉₇, a second winding *L*₉₈, and a third winding *L*₉₉.

In this case, a first end and a second end of the first power conversion circuit 912C3 are respectively connected in parallel to two ends of the battery module 912C1, and a third end and a fourth end of the first power conversion circuit 912C3 are respectively connected to two ends of the first winding *L*₉₇. Two ends of the second winding *L*₉₈ are respectively connected to a first end and a second end of the second power conversion circuit 912C4, and a third end and a fourth end of the second power conversion circuit 912C4 are respectively connected to the positive bus and the negative bus of the battery cluster. The first battery management circuit 912C5 and the battery module 912C1 are packaged together, and the first battery management circuit 912C5 is connected to the battery control circuit 913 through the communication cable 1.

A first end of the insulation detection circuit 912C2 is connected to the metal enclosure 911, a second end of the insulation detection circuit 912C2 is connected to one end of the battery module 912C1, and a third end and a fourth end of the insulation detection circuit 912C2 are connected to two ends of the third winding *L*₉₉.

The first battery management circuit 912C5 may send a third insulation failure warning signal to the battery control circuit 913 when insulation of the first battery pack 912C fails.

Optionally, the first battery management circuit 912C5 further sends a location of the first battery pack 912C in the battery cluster to the battery control circuit 913. Optionally, before sending the third insulation failure warning signal to the battery control circuit 913, the first battery management circuit 912C5 may send the location of the first battery pack 912C in the battery cluster to the battery control circuit 913. Alternatively, when determining that the insulation of the first battery pack 912C fails, the first battery management circuit 912C5 may send the third insulation failure warning signal and the location of the first battery pack 912C in the battery cluster to the battery control circuit 913 at the same time. Alternatively, after sending the third insulation failure warning signal to the battery control circuit 913, the first battery management circuit 912C5 may send the location of the first battery pack 912C in the battery cluster to the battery control circuit 913. For example, if the first battery pack 912A, the first battery pack 912B, and the first battery pack 912C are sequentially arranged from left to right, the location of the first battery pack 912C in the battery cluster is a rightmost location.

**In** some feasible implementations, the battery cluster further includes a power distribution box 914. The power distribution box 914 may distribute energy output by a battery.

For example, when determining that the battery cluster is in a non-charging state and a non-discharging state, the battery control circuit 913 starts insulation detection on each first battery pack. For example, in the first battery pack 912A, the battery control circuit 913 sends an insulation detection start signal to the first battery management circuit 912A5, and the first battery management circuit 912A5 sends the insulation detection start signal to the insulation detection circuit 912A2. When the insulation detection circuit 912A2 detects that a current between the battery module 912A1 and the metal enclosure 911 is higher than a preset current threshold, the insulation detection circuit 912A2 sends the first insulation failure warning signal through the first battery management circuit 912A5. Similarly, for the first battery pack 912B and the first battery pack 912C, refer to the process of generating the insulation failure warning signal of the first battery pack 912A. Details are not described herein again.

In this embodiment of this application, the communication cable may be used to locate a physical location of each first battery pack in the battery cluster, and when the insulation detection circuit detects that insulation of the corresponding first battery pack fails, the first battery pack may be quickly replaced. This helps improve production efficiency and maintenance efficiency.

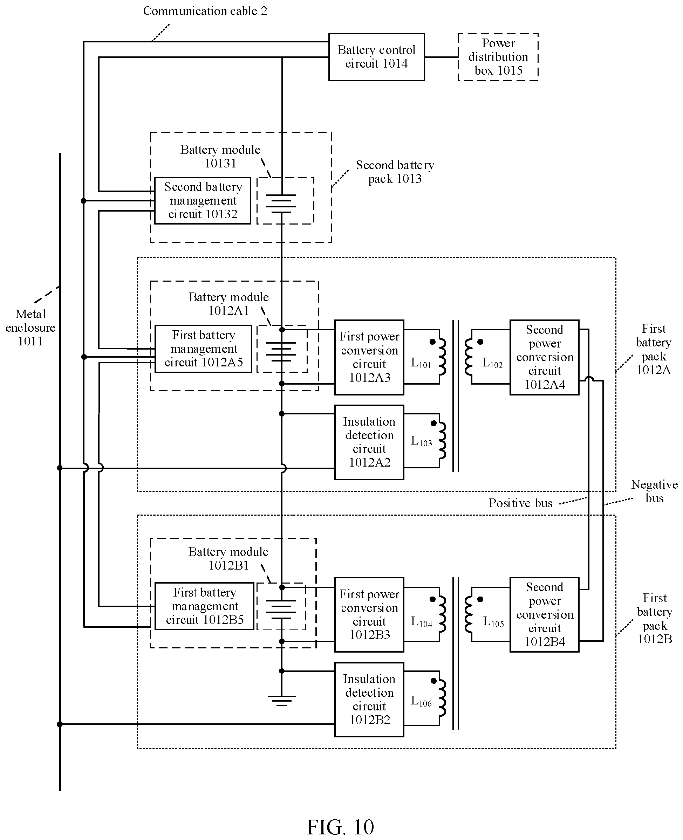

Optionally, in some feasible implementations, refer to FIG. 10. FIG. 10 is another block diagram of the structure of the battery cluster according to an embodiment of this application. As shown in FIG. 10, the battery cluster includes a metal enclosure 1011 and a plurality of first battery packs accommodated in the metal enclosure 1011, for example, a first battery pack 1012A and a first battery pack 1012B.

For example, each first battery pack is specifically implemented as the first battery pack shown in FIG. 7. In this case, each first battery pack includes a battery module, an insulation detection circuit, a first power conversion circuit, a transformer, and a second power conversion circuit, and each first battery pack further includes a first battery management circuit.

The metal enclosure 1011 of the battery cluster and a metal enclosure of each first battery pack have a same electric potential point. In a specific implementation, the insulation detection circuit in each first battery pack is connected to the metal enclosure corresponding to the first battery pack, and then the metal enclosure of each first battery pack is in contact with the metal enclosure 1011 of the battery cluster. In other words, the metal enclosure of each first battery pack is electrically connected to the metal enclosure 1011 of the battery cluster.

In a specific implementation, the first battery pack 1012A includes a battery module 1012A1, an insulation detection circuit 1012A2, a first power conversion circuit 1012A3, a transformer, a second power conversion circuit 1012A4, and a first battery management circuit 1012A5. The transformer includes a first winding *L*₁₀₁, a second winding *L*₁₀₂, and a third winding *L*₁₀₃.

In this case, a first end and a second end of the first power conversion circuit 1012A3 are respectively connected in parallel to two ends of the battery module 1012A1, and a third end and a fourth end of the first power conversion circuit 1012A3 are respectively connected to two ends of the first winding *L*₁₀₁. Two ends of the second winding *L*₁₀₂ are respectively connected to a first end and a second end of the second power conversion circuit 1012A4, and a third end and a fourth end of the second power conversion circuit 1012A4 are respectively connected to a positive bus and a negative bus of the battery cluster. The first battery management circuit 1012A5 and the battery module 1012A1 are packaged together, and the first battery management circuit 1012A5 is connected to a battery control circuit 1014 through a communication cable 2. For example, the communication cable 2 may be a CAN communication cable.

A first end of the insulation detection circuit 1012A2 is connected to the metal enclosure 1011, a second end of the insulation detection circuit 1012A2 is connected to one end of the battery module 1012A1, and a third end and a fourth end of the insulation detection circuit 1012A2 are connected to two ends of the third winding *L*₁₀₃.

The first battery pack 1012B includes a battery module 1012B1, an insulation detection circuit 1012B2, a first power conversion circuit 1012B3, a transformer, a second power conversion circuit 1012B4, and a first battery management circuit 1012B5. The transformer includes a first winding *L*₁₀₄, a second winding *L*₁₀₅, and a third winding *L*₁₀₆.

In this case, a first end and a second end of the first power conversion circuit 1012B3 are respectively connected in parallel to two ends of the battery module 1012B1, and a third end and a fourth end of the first power conversion circuit 1012B3 are respectively connected to two ends of the first winding *L*₁₀₄. Two ends of the second winding *L*₁₀₅ are respectively connected to a first end and a second end of the second power conversion circuit 1012B4, and a third end and a fourth end of the second power conversion circuit 1012B4 are respectively connected to the positive bus and the negative bus of the battery cluster. The first battery management circuit 1012B5 and the battery module 1012B1 are packaged together, and the first battery management circuit 1012B5 is connected to a first end of the first battery management circuit 1012A5 in the first battery pack 1012A. The first battery management circuit 912B5 is connected to the battery control circuit 1014 through the communication cable 2. For example, the communication cable 2 may be a CAN communication cable.

A first end of the insulation detection circuit 1012B2 is connected to the metal enclosure 1011, a second end of the insulation detection circuit 1012B2 is connected to one end of the battery module 1012B1, and a third end and a fourth end of the insulation detection circuit 1012B2 are connected to two ends of the third winding *L*₁₀₆.

In addition, the battery cluster further includes a second battery pack 1013, and the second battery pack 1013 includes a battery module 10131 and a second battery management circuit 10132. A first end of the second battery management circuit 10132 is connected to a second end of the first battery management circuit 1012A5 in the first battery pack 1012A. The second battery management circuit 10132 may be further connected to the battery control circuit 1014 through the communication cable 2. For example, the communication cable 2 may be a CAN communication cable.

Optionally, a structure of the second battery pack 1013 may also be specifically implemented as the structure of the first battery pack shown in FIG. 7.

Similarly, a metal enclosure of the second battery pack 1013 is also electrically connected to the metal enclosure 1011 of the battery cluster.

The first battery management circuit 1012A5 may send a first insulation failure warning signal to the second battery management circuit 10132 in the second battery pack 1013 when insulation of the first battery pack 1012A fails.

For example, before or after sending the first insulation failure warning signal, the first battery management circuit 1012A5 may further send, to the second battery management circuit 10132, a location of the first battery pack 1012A relative to the second battery pack 1013. The second battery pack 1013, the first battery pack 1012A, and the first battery pack 1012B are sequentially arranged from left to right. The first battery management circuit 1012A5 sends a first level to the second battery management circuit 10132, and the second battery management circuit 10132 determines that the first battery pack 1012A is on a right side of the second battery pack 1013.

The second battery management circuit 10132 sends a location of the second battery pack 1013 in the battery cluster and the location of the first battery pack 1012A relative to the second battery pack 1013 to the battery control circuit 1014. In this case, the battery control circuit 1014 may determine a location of the first battery pack 1012A in the battery cluster. For example, the second battery pack 1013 ranks first in the battery cluster, and the battery control circuit 1014 may determine that the first battery pack 1012A ranks second in the battery cluster.

The first battery management circuit 1012B5 may send a second insulation failure warning signal to the first battery management circuit 1012A5 in the first battery pack 1012A when insulation of the first battery pack 1012B fails.

Similarly, before or after sending the second insulation failure warning signal, the first battery management circuit 1012B5 may further send, to the first battery management circuit 1012A5, a location of the first battery pack 1012B relative to the first battery pack 1012A. The second battery pack 1013, the first battery pack 1012A, and the first battery pack 1012B are sequentially arranged from left to right. The first battery management circuit 1012B5 sends a first level to the first battery management circuit 1012A5. The second battery management circuit 10132 determines that the first battery pack 1012B is on a right side of the first battery pack 1012A.

The first battery management circuit 1012B5 sends the location of the second battery pack 1013 in the battery cluster, a location of the first battery pack 1012B relative to the second battery pack 1013, and the location of the first battery pack 1012B relative to the first battery pack 1012A to the battery control circuit 1014. In this case, the battery control circuit 1014 may determine a location of the first battery pack 1012B in the battery cluster. For example, the second battery pack 1013 ranks first in the battery cluster, and the battery control circuit 1014 may determine that the first battery pack 1012A ranks second in the battery cluster and the first battery pack 1012B ranks third in the battery cluster.

In this embodiment of this application, the communication cable is used to transmit an insulation failure warning signal, and a physical location of each first battery pack is located based on a connection between common I/O ports of battery management circuits, without occupying a communication resource of the communication cable. The first battery pack can also be quickly replaced when the insulation detection circuit detects that insulation of the corresponding first battery pack fails. This helps improve production efficiency and maintenance efficiency.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A battery cluster, wherein the battery cluster comprises a plurality of battery packs, and a first battery pack in the plurality of battery packs comprises a metal enclosure, and a battery module and an insulation detection circuit that are accommodated in the metal enclosure; and
a first end of the insulation detection circuit is connected to the metal enclosure, a second end of the insulation detection circuit is connected to one end of the battery module, and the insulation detection circuit is configured to: when detecting that a current between the battery module and the metal enclosure is higher than a preset current threshold, determine that insulation of the first battery pack fails.

2. The battery cluster according to claim 1, wherein the first battery pack further comprises a first power conversion circuit, a second power conversion circuit, and a transformer that are accommodated in the metal enclosure, wherein the transformer is disposed between the first power conversion circuit and the second power conversion circuit, and the transformer comprises a first winding, a second winding, and a third winding;
a first end and a second end of the first power conversion circuit are respectively connected to two ends of the battery module, and a third end and a fourth end of the first power conversion circuit are respectively connected to two ends of the first winding;
a first end and a second end of the second power conversion circuit are respectively connected to two ends of the second winding; and
a third end and a fourth end of the insulation detection circuit are respectively connected to two ends of the third winding.

3. The battery cluster according to claim 2, wherein the insulation detection circuit comprises a current sampling sub-circuit and a rectifier sub-circuit; and
a first input end and a second input end of the rectifier sub-circuit are respectively connected to the two ends of the third winding, a first output end of the rectifier sub-circuit is connected to the current sampling sub-circuit, and a second output end of the rectifier sub-circuit is connected to the metal enclosure or the battery module.

4. The battery cluster according to claims 1 to 3, wherein the insulation detection circuit comprises a switch sub-circuit, and the switch sub-circuit is turned on when an insulation detection start signal is received.

5. The battery cluster according to claim 4, wherein the insulation detection circuit further comprises a control sub-circuit; and
the control sub-circuit is configured to send the insulation detection start signal to the switch sub-circuit when the battery cluster is in a non-charging state and a non-discharging state.

6. The battery cluster according to any one of claims 1 to 5, wherein the battery cluster further comprises a communication cable and a battery control circuit, the first battery pack further comprises a first battery management circuit, and the first battery management circuit is connected to the battery control circuit through the communication cable; and
the first battery management circuit is configured to send an insulation failure warning signal to the battery control circuit when the insulation of the first battery pack fails.

7. The battery cluster according to claim 6, wherein the first battery management circuit is further configured to send a location of the first battery pack in the battery cluster to the battery control circuit.

8. The battery cluster according to claim 6, wherein the battery cluster further comprises a second battery pack and the battery control circuit, and the second battery pack comprises a second battery management circuit;
a first end of the second battery management circuit is connected to the first battery management circuit, and the first battery management circuit is further configured to send a location of the first battery pack relative to the second battery pack to the second battery management circuit; and
a second end of the second battery management circuit is connected to the battery control circuit, and the second battery management circuit is configured to send a location of the second battery pack in the battery cluster and the location of the first battery pack relative to the second battery pack to the battery control circuit, so that the battery control circuit determines a location of the first battery pack in the battery cluster.

9. An energy storage system, wherein the energy storage system comprises a power conversion system and the battery cluster according to any one of claims 1 to 8, and the battery cluster is connected to the power conversion system.

10. An uninterruptible power system, wherein the uninterruptible power system comprises an AC/DC converter, a DC/AC converter, and the battery cluster according to any one of claims 1 to 8, and the battery cluster is connected to the AC/DC converter and the DC/AC converter.

11. An electric vehicle, wherein the electric vehicle comprises a motor and the battery cluster according to any one of claims 1 to 8, and the battery cluster is configured to supply power to the motor.
